(19) Europäisches Patentamt
European Patent Office
Office européen des brevets

(11) **EP 0 599 396 B1**

## (12) EUROPEAN PATENT SPECIFICATION

(45) Date of publication and mention
of the grant of the patent:
**11.09.1996 Bulletin 1996/37**

(51) Int Cl.$^6$: **D04H 13/00**

(21) Application number: **93203210.5**

(22) Date of filing: **16.11.1993**

(54) **A melt-blown composite feather and/or down wadding, its producing method and equipment**

Verbund aus Flaum oder Watte zwischen geschmolzenen geblasenen Fasern, sein Herstellverfahren und Anlage

Composé en duvet ou ouate entre des fibres fondues-soufflies, sa méthode de production et l'equipement

(84) Designated Contracting States:
**DE GB IT**

(30) Priority: **17.11.1992 CN 92113028**
**16.08.1993 CN 93109764**

(43) Date of publication of application:
**01.06.1994 Bulletin 1994/22**

(73) Proprietor: **BEIJING CHALLEN NONWOVEN TECH. CORP.**
**Haidian District, Beijing (CN)**

(72) Inventors:
- **Li, Chun Zeng**
  **Haidian District, Beijing (CN)**
- **Yu, Gan, Science Techn.& Trade Ctr.**
  **Haidian District, Beijing 100081 (CN)**
- **Wu, Zheng Nan, Science Techn.& Trade Centre**
  **Haidian District, Beijing 100081 (CN)**
- **Dong, Ping, Science Techn.& Trade Centre**
  **Haidian District, Beijing 100081 (CN)**
- **Shao, Cheng Xu, Science Techn.& Trade Centre**
  **Haidian District, Beijing 100081 (CN)**
- **Sun, Song Yan, Science Techn.& Trade Centre**
  **Haidian District, Beijing 100081 (CN)**
- **Wu, Jian Zhou, Science Techn.& Trade Centre**
  **Haidian District, Beijing 100081 (CN)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
| | |
|---|---|
| EP-A- 0 343 978 | DE-A- 3 824 983 |
| US-A- 3 449 187 | US-A- 4 167 604 |

- **PATENT ABSTRACTS OF JAPAN vol. 015, no. 197 (C-0833)21 May 1991 & JP-A-30 051 350 (KAWAMURA) 5 March 1991**
- **DATABASE WPI Section Ch, Week 8644, Derwent Publications Ltd., London, GB; Class F04, AN 86-289229 & JP-A-61 213 087 (KAWAMURA) 22 September 1986**

## Description

## INTRODUCTION

The present invention relates to the melt-blown nonwovens field and, particularly to a melt-blown composite feather and/or down wadding (MBCFDW), its producing method and its producing equipment.

## BACKGROUND OF THE INVENTION

In the prior art, as a kind of thermal insulation material, natural feather and/or down have the disadvantages of looseness and are easily leaked, and very difficult to be formed to desired shapes, resulting in the forming method being limited to such process that the surface materials have to be sewed in grids with feather and/or down in. Thus, the feather can not fully reflect its advantages of thermal insulation, lightness and softness, and it is difficult to be used in fashionable dress. So much effort has been made to modify the surface materials, but no breakthrough occurs yet in this area. Up to now, there is no method to process the feather and/or down to product which is easy to form and cut into a desired shape.

The object of the present invention is to provide a material(MBCFDW), its producing method and equipment by which the feather and/or down and the molten polymer are blown out simultaneously to form the composite wadding directly in the melt-blown nonwoven process.

## SUMMARY OF THE INVENTION

According to the present invention, the feather and/or down and the molten polymer are blown out simultaneously to form the MBCFDW directly. The object of the present invention is realized by the following method and equipment.

According to first aspect of the invention, a producing method for the melt-blown composite feather and/or down wadding is provided and comprises following steps.

a kind of or kinds of polymer are molten, extruded and blown out to form two or more layers of melt-blown fiber webs by melt-blown process; said webs tend to extend to join together, and an angle β exists between the extending directions of said webs;

in the meantime, the pre-equalized feather and/or down is transported by the air flow to the feather and/or down slot jet and blown out in a laminated state and is sandwiched and wrapped between the fiber webs, said feather and/or down and said fiber webs twine, stick and mix together randomly and are condensed and formed on the receiving device successively and directly.

Preferably, said melt-blown angle β is within the range of 0°<=β<=180°, the number of layers of said melt-blown fiber webs is n, which is 2 or more.

Preferably, when said fiber webs and said feather and/or down twine and stick together to form the composite material, the other materials can be added on the surface layer or between layers of the composite material to improve comprehensive or specific property of the composite wadding.

Preferably, said producing method is suit for incorporating nature material with melt blown fiber; said natural material includes the feather and/or down of other animals and the natural fiber; said melt-blown fiber includes a kind of or n kinds of chemical fiber which is suitable for melt blown process.

According to second aspect of the invention, a product of the melt blown composite feather and/or down wadding produced by above method is provided. The product is a thermal insulation material formed by incorporating natural material with melt blown fiber, wherein said feather and/or down is natural one; said chemical fiber is the melt blown fiber.

According to third aspect of the invention, an equipment is further provided and comprises an extrude means, a spinning box, die heads, a receiving means, an isolating screen means, a pre-equalizer means, feather and/or down transportation pipes.

The die heads are positioned and supported by both die head holders and the coupling; the die heads can be adjusted to form the angle β between the extending directions of melt blown fiber webs; a feather and/or down slot jet is provided between the two die heads; by adjusting and controlling the airflow rate of the inlet airflow valve and the outlet airflow valve of the pre-equalizer means, the feather and/or down can be rotated, pre-equalized and transported in certain quantity to the down slot jet in laminated state, the receiving means may be a screen roller or conveyor belt.

Preferably, the number of the die heads may be two or two groups, n or n groups, said angle β is 0°<=β<=180°, the number of the feather and/or down slot jet is one to n-1, and the width of the feather and/or down slot jet is less than or equal to that of the die heads.

Preferably, said equipment may include a negative pressure means to provide a negative area on the surface of the receiving means.

According to the present invention, the chemical fiber and the natural feather and/or down are compounded directly on its first meeting to form the wadding by the melt-blown method. In the melt-blown process, the feather and/or down and the melt-blown fiber webs twine, overlap and stick together randomly to form the successive laminated wadding which can be cut willfully. This method is not the two step forming method, e.g., needle punching and knitting mechanically, bonding chemically and heat setting, which is not suit to the down forming. Thus, the producing method provided by the invention is simple and reasonable and easily realized.

Also according to the invention, the feather and/or down and the chemical fiber twine, stick and mix together randomly by the melt-blown method, wherein the melt-blown fiber is not only the carrier and the linker, but also the "bonding agent" and the protective, so that the compounded feather and/or down can be fixed in the melt blown fiber webs randomly and a lot of tiny cavities are formed. In this way , the feather and/or down can be saved a lot, the cost of the product can be decreased, the characteristics of the thermal insulation and the softness as well as the tensile strength of the wadding can be improved.

According to this invention, by adopting such a method, the chemical fiber can be a material such as polypropylene fiber, polyester, nylon, etc. and the feather and down can be the feather and/or down of the other animals, and the natural fiber, such as the nap, the flax, the silk,etc. In addition to that, other specially required materials can also be mixed with the down. Therefore the product may be a multi-materials or multi-layer composite material if desired , and the diversification of the product can be realized.

This invention solves the problem of forming, fixing, sewing and cutting of feather and/or down. By application of the invention, the product characteristics of thermal insulation, softness and tensile strength of the formed wadding are much improved.

Further objects and advantages of the invention will appear from the following description taken together with the accompanying drawings

BRIEF DESCRIPTION OF THE ACCOMPANYING DRAWINGS

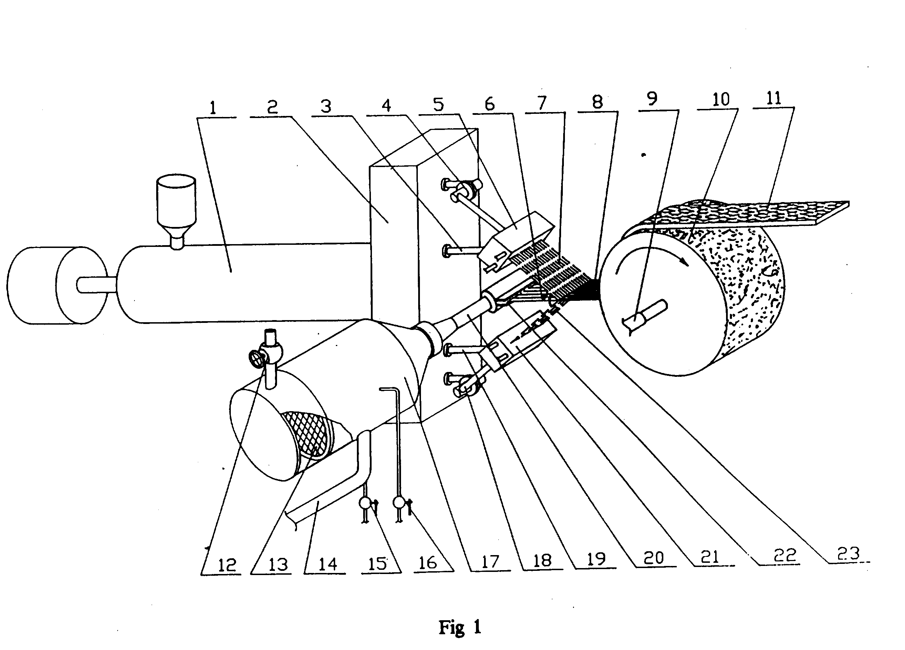

Figure 1 is a schematic view for the producing method and equipment for MBCFDW.

DETAILED DESCRIPTION OF PREFERRED EMBODIMENTS

The prefer embodiment of the present invention can be described together with the Fig.1. According to the first embodiment of the invention, As the polymer pellets pass through an extruder 1 and a spinning box 2, they are melted and extruded to the die heads 5, 21. At the same time, the feather and/or down is transported, through a transportation pipe 20, to a feather and/or down slot jet 22 and is blown out in laminated state. In this process, by adjusting the die head holders 3, 19 and the couplings 4, 18, an angle $\beta$ is formed between the extending directions of the melt blown fiber webs, and can be varied within the range of $0<=\beta<=180$. The pre-equalization of the feather and/or down 6 is realized by rotation of the feather and/or down in the pre-equalizer 17 with the adjustment of the inlet airflow rate of the inlet airflow valve 16, then the output of the feather and/or the down 6, which pass through the inlet airflow pipe 14, is adjusted by the inlet airflow valve 15 and the outlet air flow valve 12.

As shown in the figure, the isolating screen 13 is used to protect the down and/or feather 6 from letting out. When the molten polymer is blown out of the die heads 5, 21 and attenuated into fibers, the fibers overlap and stick together randomly to form the melt-blown fiber webs 7. Meanwhile, the pre-equalized feather and/or down 6 is blown out from the feather and/or down slot jet 22, sandwiched and wrapped between the webs, twined, sticked and mixed with the fiber webs together to form the composite material 8, wherein the melt blown fiber webs 7 are not only the carrier and linker but also the bonding agent and the protective, so that the fiber web 7 can be compounded three-dimensionally with the feather and/or down 6. By the continuous wrap of the hot airflow and the negative pressure suction of the receiving device 10, the composite material 8 is condensed, collected and formed on the surface of the receiving device 10. Then the composite material 8 is rotated together with the receiving device 10 to form the composite feather and/or down wadding 11 successively. As shown in the figure, the receiving device 10 is a screen roller or screen conveyor belt. In the device 10, a negative pressure device is provided. The negative pressure receiving area of the receiving device faces the composite material 8. According to the present invention, the width of the feather and/or down slot jet 22 is designed to be less than or equal to that of the die heads 5, 21, so that the feather and/or down 6 is guaranteed to fully fixed and can be protected from scattering or letting out.

The present invention is also suit to the composite wadding of a plurality of kinds of materials, multi-layer structure, or more different specifications or different application, which can be produced by different raw polymer materials, or by increasing the number of the die heads or the feather and/or down slot jets, or by the method of overlap, or by incorporating the other materials on the surface of or in the composite material 8, wherein the other materials incorporated may be the woven or nonwoven fabric in band or piece type, and can also be a special material such as pellet, powder, liquid, atomized material, etc. Besides, by controlling the output of the feather and/or down 6, the fine and close chemical fiber layer is formed on the surface of the composite material, so that the product of chemical fiber with feather and/or down composite material or chemical fiber with chemical fiber composite material can be obtained. During the process of production, by adjusting the rotating rate and times of travel motion of the receiving device 10 , the wadding of different specifications is available.

The second embodiment of the present invention is similar to the first one, the difference is only that three die heads (two for nylon, one for polypropylene ) and two feather and/or down slot jets are included in the second embodiment, so that the composite wadding of nylon-down-polypropylene-down-nylon can be obtained.

The third embodiment of the present invention is also similar to the first one, the difference is only that three die heads (two for polypropylene, one for polyester) and two feather and/or down slot jets are provided, By controlling output of feather and/or down when the receiving device rotating, the overlapped composite wadding with a structure of polypropylene-polyester-polypropylene iterative layers and polypropylene-down-polster-down-polypropylene composite layers as well as polypropylene-polyester-polypropylene iterative layers can be obtained.

While the description of the invention has been given respect to a preferred embodiment, it is not to be constructed in a limited sense. Variations and modification will occur to those skilled in the art. Reference is made to the appended claims for a definition of the invention.

## Claims

1. A producing method for the melt-blown composite feather and/or down wadding, which is characterized by that:

   a kind of or kinds of polymer are molten, extruded and blown out to form two or more layers of melt-blown fiber webs by melt-blown process; said webs tend to extend to join together, and an angle β exists between the extending directions of said webs;

   in the meantime, the pre-equalized feather and/or down is transported by the air flow to the feather and/or down slot jet and blown out in a laminated state and is sandwiched and wrapped by said fiber webs, the feather and/or down and said fiber webs twine, stick and mix together randomly and are condensed and formed on the surface of the receiving device successively and directly.

2. A producing method as claimed in claim 1, wherein, said melt-blown angle β is within the range of 0°<=β<=180° , the number of layers of said melt-blown fiber webs is n, which is 2 or more.

3. A producing method as claimed in claim 1, wherein, when said fiber webs and said feather and/or down twine, stick and mix together to form the composite material, the other materials can be added on the surface layer or between layers of the composite material to improve comprehensive or specific property of the composite wadding.

4. A producing method as claimed in claim 1, wherein , said producing method is suit for incorporating nature material with melt blown fiber; said natural material includes the feather and/or down of other animals and the natural fiber; said melt-blown fiber includes a kind of or n kinds of chemical fiber which is suitable for melt blown process.

5. A product of the melt blown composite feather and/or down wadding produced by the method in claim 1, which is characterized by that:

   the product is a thermal insulation material formed by incorporating natural material with melt blown fiber; wherein said feather and/or down is natural one; said chemical fiber is the melt blown fiber.

6. An equipment specially designed according to the producing method in claim 1, comprising:

   an extruder means(1), a spinning box(2), die heads(5, 21), a receiving means(10), an isolating screen means(3), a pre-equalizer means (17), feather and/or down transportation pipes (20), which is characterized by that:

   the die heads(5, 21) are positioned and supported by both die head holders(3, 19) and the coupling (4, 18); the die heads can be adjusted to form the angle β between the extending directions of melt blown fiber webs; a feather and/or down slot jet (22) is provided between the two die heads(5, 21); by adjusting and controlling the airflow rate of the inlet airflow valve(15, 16) and the outlet airflow valve(12) of the pre-equalizer means (17), the feather and/or down (6) can be rotated, pre-equalized and transported in certain quantity to the down slot jet(22) in laminated state, the receiving means(10) may be a screen roller or conveyor belt.

7. An equipment as claimed in claim 6, wherein, the number of the die heads(5, 21) may be two or two groups, n or n groups, said angle β is 0°<=β <=180°, the number of the feather and/or down slot jet(22) is one to n-1, and the width of the feather and/or down slot jet(22) is less than or equal to that of the die heads (5, 21).

8. An equipment as claimed in claim 6, wherein, said equipment may include a negative pressure means(9) to provide a negative area on the surface of the receiving means(10).

## Patentansprüche

1. Herstellungsverfahren für die schmelz-geblasene Faserverbund-Feder- und/oder -Daunen-Wattierung, die gekennzeichnet ist durch:

   - eine Sorte oder Sorten von Polymeren werden geschmolzen, extrudiert und ausgeblasen, um zwei oder mehr Schichten von schmelz-geblasenen Fasermatten durch einen Schmelz-Blase-Vorgang zu bilden; die Matten tendieren dazu, sich derart zu erstrecken, daß sie sich miteinander verbinden, und zwischen den Erstreckungsrichtungen der Matten liegt ein Winkel $\beta$ vor;

- in der Zwischenzeit werden die vorvergleichmäßigten Federn und/oder Daunen durch die Luftströmung zum Feder- und/oder Daunen-Schlitzstrahl transportiert und in einem schichtförmigen Zustand ausgeblasen und durch die Fasermatten sandwichartig aufgenommen und umhüllt, wobei sich die Federn und/oder Daunen und die Fasermatten willkürlich miteinander verweben, verbinden und vermischen und anschließend direkt auf der Oberfläche der Aufnahmeeinrichtung verdichtet und geformt werden.

2. Herstellungsverfahren nach Anspruch 1, wobei der Schmelz-Blase-Winkel $\beta$ innerhalb des Bereichs von $0° \leq \beta \leq 180°$ liegt und die Anzahl der Schichten der schmelz-geblasenen Fasermatten n beträgt, was 2 oder mehr ist.

3. Herstellungsverfahren nach Anspruch 1, wobei, wenn die Fasermatten und die Federn und/oder Daunen sich miteinander verweben, verbinden und vermischen, um das Verbundfasermaterial zu bilden, andere Materialien auf der Oberflächenschicht oder zwischen Schichten des Verbundfasermaterials hinzugefügt werden können, um die Gesamteigenschaft oder eine spezielle Eigenschaft der Verbundfaser-Wattierung zu verbessern.

4. Herstellungsverfahren nach Anspruch 1, wobei das Herstellungsverfahren geeignet ist, um geschmolzene geblasene Fasern in ein Naturmaterial einzuarbeiten; das natürliche Material umfaßt die Federn und/oder Daunen von Tieren und natürliche Fasern; die schmelz-geblasenen Fasern umfassen eine Sorte oder n Sorten von chemischen Fasern, die für ein Schmelz-Blase-Verfahren geeignet sind.

5. Produkt der schmelz-geblasenen Verbundfaser-Feder- und/oder -Daunen-Wattierung, das mit dem Verfahren von Anspruch 1 hergestellt wurde und gekennzeichnet ist durch:

- das Produkt ist ein thermisches Isolationsmaterial, das durch Einarbeitung von geschmolzenen geblasenen Fasern in ein natürliches Material gebildet ist, wobei die Federn und/oder Daunen natürlich sind und die chemischen Fasern geschmolzene geblasene Fasern sind.

6. Anlage, die speziell entsprechend dem Herstellungsverfahren von Anspruch 1 ausgelegt ist und folgendes umfaßt:

- eine Extrudiereinrichtung (1), einen Verspinnkasten (2), Düsenköpfe (5, 21), eine Aufnahmeeinrichtung (10), eine Trennsiebeinrichtung (13), eine Vor-Vergleichmäßigungs-Einrichtung (17), Feder- und/oder Daunen-Transportleitungen (20), durch folgendes gekennzeichnet:

- die Düsenköpfe (5, 21) werden sowohl durch Düsenkopfhalter (3, 19) als auch durch Kupplungen (4, 18) positioniert und gehalten; die Düsenköpfe können eingestellt werden, um den Winkel $\beta$ zwischen den Erstreckungsrichtungen der geschmolzenen geblasenen Fasermatten zu bilden; ein Feder-und/oder Daunen-Schlitzstrahl (22) ist zwischen den beiden Düsenköpfen (5, 21) vorgesehen; durch Einstellen und Steuern der Luftströmungsrate des Einlaß-Luftströmungsventils (15, 16) und des Auslaß-Luftströmungsventils (12) der Vor-Vergleichmäßigungs-Einrichtung (17) können die Federn und/oder Daunen (6) gedreht, vorvergleichmäßigt und in einer bestimmten Menge in einem schichtförmigen Zustand zum Daunen-Schlitzstrahl (22) transportiert werden; die Aufnahmeeinrichtung (10) kann eine Siebrolle oder ein Förderband sein.

7. Anlage nach Anspruch 6, wobei die Anzahl der Düsenköpfe (5, 21) zwei oder zwei Gruppen, n oder n Gruppen sein kann, der Winkel $\beta$ $0° \leq \beta \leq 180°$ ist, die Anzahl der Feder-und/oder Daunen-Schlitzstrahle (22) 1 bis n-1 beträgt, und die Weite des Feder- und/oder Daunen-Schlitzstrahls (22) kleiner als oder gleich der Weite der Düsenköpfe (5, 21) ist.

8. Anlage nach Anspruch 6, wobei die Anlage eine Unterdruck-Einrichtung (9) umfassen kann, um eine Unterdruckfläche auf der Oberfläche der Aufnahmeeinrichtung (10) zu schaffen.

**Revendications**

1. Une méthode pour la production de composites fondus-soufflés à base d'ouate de plumes et/ou de duvet, caractérisée en ce que :

une sorte ou des sortes de polymères sont fondues, extrudées et soufflées pour former deux ou plusieurs couches de tissu de fibres fondues-soufflées par un procédé de fusion-soufflage ; lesdits tissus tendent à s'étendre pour s'assembler les uns aux autres, et un angle $\beta$ existe entre les directions d'extension desdits tissus ;

pendant ce temps, le duvet et/ou les plumes pré-égalisés sont transportés par un flux d'air vers le jet plat de duvet et/ou de plumes, et soufflés dans un état laminé, et sont pris en sandwich et entourés par lesdits tissus de fibres, les plumes et/ou le duvet et lesdits tissus de fibres s'entortillent, adhèrent et se mélangent les uns aux autres au hasard et sont condensés et mis en forme à la surface de l'organe de réception successivement et directement.

2. Une méthode de production telle que revendiquée dans la revendication 1, dans laquelle,

ledit angle de fusion-soufflage β est dans la plage 0° < = β< =180°, le nombre de couches desdits tissus de fibres fondues-soufflées est de n, qui vaut 2 ou plus.

3. Une méthode de production telle que revendiquée dans la revendication 1, dans laquelle,

lorsque lesdits tissus de fibres et lesdits plumes et/ou duvet s'entortillent, adhèrent et se mélangent les uns aux autres pour former le matériau composite, les autres matériaux peuvent être ajoutés sur la couche superficielle ou entre les couches du matériau composite afin d'améliorer toutes ou certaines des propriétés de l'ouate composite.

4. Une méthode de production telle que revendiquée dans la revendication 1, dans laquelle,

ladite méthode de production convient pour incorporer un matériau naturel aux fibres fondues-soufflées ; ledit matériau naturel comprend les plumes et/ou duvet d'autres animaux et les fibres naturelles ; lesdites fibres fondues-soufflées comprennent un type ou n types de fibres chimiques adaptées au procédé de fusion-soufflage.

5. Un produit de composites fondus-soufflés à base d'ouate de plumes et/ou de duvet produit par la méthode de la revendication 1, caractérisé en ce que :

le produit est un matériau d'isolation thermique formé en incorporant un matériau naturel aux fibres fondues-soufflées ; dans lequel lesdits plumes et/ou duvet sont naturels ; lesdites fibres chimiques sont les fibres fondues-soufflées.

6. Un équipement spécifiquement conçu selon la méthode de production de la revendication 1, comprenant :

des moyens d'extrusion (1), une boîte de filage (2), des têtes de filière (5, 21), des moyens de réception (10), des moyens d'écran d'isolation (3), des moyens de pré-égalisation (17), des tuyaux de transport de plumes et/ou de duvet, caractérisé en ce que :

les têtes de filière (5, 21) sont positionnées et supportées par à la fois des supports de têtes de filière (3, 19) et l'accouplement (4, 18) ; les têtes de filière peuvent être ajustées pour former un angle β entre les directions d'extension des tissus de fibres fondues-soufflées ; un jet plat de duvet et/ou de plumes (22) est fourni entre les deux têtes de filière (5, 21) ; en ajustant et contrôlant le débit d'air de la vanne d'entrée d'air (15, 16) et de la vanne de sortie d'air (12) des moyens de pré-égalisation (17), les plumes et/ou le duvet (6) peuvent être tournés, pré-égalisés et transportés en une certaine quantité vers le jet plat de duvet (22) à l'état laminé, les moyens de réception (10) peuvent être un rouleau à écran ou une courroie de transport.

7. Un équipement tel que revendiqué dans la revendication 8, dans lequel

le nombre de têtes de filière (5, 21) peut être deux ou deux groupes, n ou n groupes, ledit angle β est 0° < =β< =180°, le nombre de jets plat de duvet et/ou de plumes (22) est de un à n-1, et la largeur du jet plat de duvet et/ou de plumes (22) est inférieure ou égale à celle des têtes de filière (5, 21).

8. Un équipement tel que revendiqué dans la revendication 8, dans lequel

ledit équipement peut comprendre des moyens de pression négative (9) afin de fournir une zone négative à la surface des moyens de réception (10).

Fig 1